# EUROPEAN PATENT APPLICATION

(11) **EP 3 915 752 A1**
(43) Date of publication of application: **01.12.2021**
(21) Application number: 19911638.5
(22) Date of filing: 24.12.2019
(51) Int. Cl.: B29C 39/28, B29K 105/04, B29C 44/00, B29C 44/56, B29C 44/58

(54) **MANUFACTURING METHOD FOR FOAMED MOLDED BODY AND SHAPING MOLD**

(30) Priority: 23.01.2019 JP 2019009304
(71) Applicant: Inoac Corporation, Nagoya-shi, Aichi 450-0003 (JP)
(72) Inventor: SUZUKI, Hiroshi, Anjo-shi, Aichi 446-8504 (JP); SUZUKI, Takatoshi, Anjo-shi, Aichi 446-8504 (JP)
(74) Representative: Berggren Oy
(86) International application number: PCT/JP2019/050621
(87) International publication number: WO 2020/153083

(57) **Abstract**

The present invention relates to a method for producing a foam molded product, in which in a foaming step, at least a part of a burr is made to be an undercut that is caught in a movable mold portion when mold opening the movable mold portion, in a cross section obtained by cutting a foam intermediate on a plane orthogonal to a direction in which a boundary between a main body and a burr extends, a fragile portion is provided at the boundary such that at least a part of the burr located near the boundary is narrowed toward the boundary, and a foam intermediate is formed, and in a removal step, the fragile portion is broken and the burr is removed by pulling the burr with the movable mold portion.

## Description

### TECHNICAL FIELD

The present invention relates to a method for producing a foam molded product and a molding mold.

### BACKGROUND ART

Patent Literature 1 discloses a urethane foaming mold including an upper mold and a lower mold. In a mating surface of the upper mold, an overhanging portion configured to form a small gap portion with a mating surface of the lower mold, and a resin storing portion, are formed. It is disclosed that when the upper mold is opened after molding, polyurethane that has been accumulated and cured in the resin storing portion is pressed in a mold opening direction by the overhanging portion, and is automatically separated from a molded product together with the excess polyurethane (burrs) after curing in the small gap portion (claim 1, page 5, and Fig. 1 of Patent Literature 1).

### CITATION LIST

### PATENT LITERATURE

Patent Literature 1: JP-UM-A-S64-40614

### SUMMARY OF INVENTION

### TECHNICAL PROBLEM

In mold molding of a foam molded product, a foam raw material that has foamed and filled in a cavity enters a slight gap between parting surfaces of a molding mold by the pressure in the cavity that has increased due to the foaming, and the foam raw material that has entered the gap remains as burrs on the foam molded product. The gap between the parting surfaces of the molding mold has an aspect functioning as a passage for allowing air, gas and the likes in the cavity to escape to the outside of the molding mold, and it is difficult to completely seal this gap.

Patent Literature 1 discloses a method of automatically removing burrs by opening the mold after molding while improving degassing efficiency, by providing the small gap portion between the mating surfaces of the upper mold and the lower mold and providing the resin storing portion in communication with the small gap portion. However, it has found that simply providing the small gap portion and the resin storing portion causes unevenness in a location (broken location) where the burrs formed in the small gap portion are separated in actual production, and the burrs tend to remain on a molded member. Burrs are mostly removed manually, and residual burrs lead to increased production time and cost.

An object of the present invention is to provide a method for producing a foam molded product and a molding mold, which can make it difficult to cause unevenness in a location where burrs break, and can reduce burrs remaining on the foam molded product.

### SOLUTION TO PROBLEM

A method for producing a foam molded product according to an aspect of the present invention, which can solve the above problems, is a method for producing a foam molded product including:
a foaming step of foam-molding a foam intermediate including a main body and a burr from a foam raw material in a cavity defined by a first mold portion and a second mold portion; and
a removal step of removing the burr from the foam intermediate by moving the second mold portion in a predetermined mold opening direction to obtain a foam molded product, wherein
in the foaming step,
   at least a part of the burr is made to be an undercut that is caught in the second mold portion when mold opening the second mold portion,
   a fragile portion is provided at a boundary between the main body and the burr such that in a cross section obtained by cutting the foam intermediate on a plane orthogonal to a direction in which the boundary between the main body and the burr extends, at least a part of the burr located near the boundary is narrowed toward the boundary, and
   the foam intermediate is molded, and
in the removal step,
   the fragile portion is broken and the burr is removed by pulling the burr with the second mold portion.

In addition, a molding mold according to an aspect of the present invention that can solve the above problems is a molding mold including:
a first mold portion; and
a second mold portion, wherein
the molding mold is configured to be brought from a mold closed state into a mold open state by moving the second mold portion in a predetermined mold opening direction with respect to the first mold portion, and in the mold closed state, a cavity including a main body region and a burr region is defined by the first mold portion and the second mold portion,
the molding mold is configured to mold a foam intermediate in the cavity, the foam intermediate including a main body and a burr,
the first mold portion includes a first wall portion extending to a burr region side from a first portion forming a boundary between the main body region and the burr region in the mold closed state,
the second mold portion includes a second wall portion facing the first wall portion in the mold closed state,
the second wall portion includes a concave portion recessed in a direction intersecting the mold opening direction and forming a gap with the first wall portion in the mold closed state,
the concave portion includes an inclined portion communicating with a second portion of the second mold portion forming the boundary in the mold closed state, and
the inclined portion is inclined with respect to the first wall portion so as to be separated from the first wall portion as separated from the boundary in the mold closed state.

### ADVANTAGEOUS EFFECTS OF INVENTION

According to the present invention, it is possible to provide a method for producing a foam molded product and a molding mold, which can make it difficult to cause unevenness in a location where burrs break, and can reduce burrs remaining on the foam molded product.

### BRIEF DESCRIPTION OF DRAWINGS

Fig. 1 is a perspective view showing a foam molded product produced by a method for producing a foam molded product according to an embodiment.
Fig. 2 is a cross-sectional view of the foam molded product taken along a line A-A in Fig. 1.
Fig. 3 is a cross-sectional view showing a state of molding the foam molded product.
Fig. 4 is a cross-sectional view showing a state of molding the foam molded product.
Fig. 5 is a partially enlarged view of a molding mold according to an embodiment.
Fig. 6 is a partially enlarged view of the molding mold according to the embodiment.
Fig. 7 is a diagram showing a first modification of the embodiment.
Fig. 8 is a diagram showing a second modification of the embodiment.
Fig. 9 is a diagram showing a third modification of the embodiment.
Fig. 10 is a diagram showing a fourth modification of the embodiment.
Fig. 11 is a diagram showing a fifth modification of the embodiment.

### DESCRIPTION OF EMBODIMENTS

Hereinafter, embodiments of the present invention will be described with reference to the drawings. Dimensions of each member shown in the drawings may be different from the actual dimensions of each member for convenience of description.

### (Foam Molded Product)

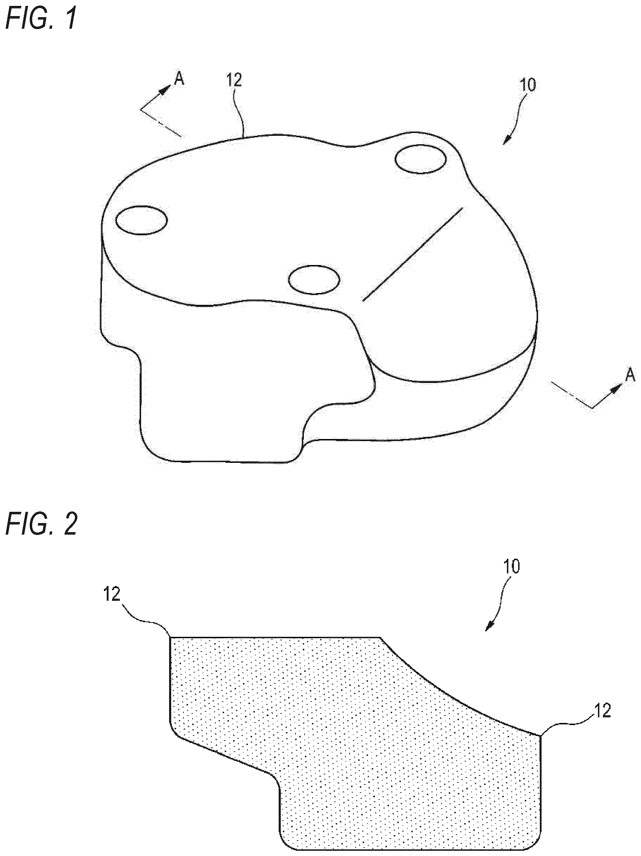

Fig. 1 is a perspective view showing a foam molded product 10 produced by a method for producing a foam molded product according to the present embodiment. Fig. 2 is a cross-sectional view of the foam molded product 10 taken along a line A-A in Fig. 1. The foam molded product 10 may be composed of a hard or soft foam such as polyurethane or olefin materials. The foam molded product 10 can take various shapes depending on the application. The foam molded product 10 shown in Fig. 1 and Fig. 2 has a block shape having a three-dimensional shape. When producing the foam molded product 10, a parting line of a molding mold described later is located at an edge portion 12 on an upper surface of the foam molded product 10 shown in Fig. 1 and Fig. 2. The foam molded product 10 is used, for example, as a shock absorbing material attached to an outer surface of a door trim (a vehicle interior member) and disposed between the door trim and a door panel (a vehicle body component) disposed outside the door trim. The foam molded product 10 as such a shock absorbing material in entirety receives the load applied from the outside of the door panel.

### (Molding Mold)

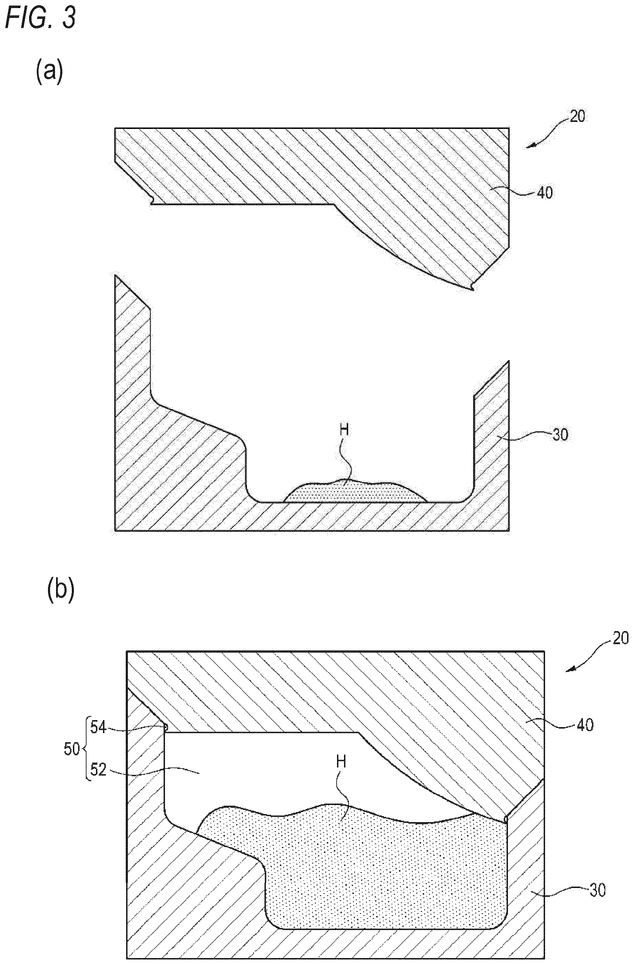

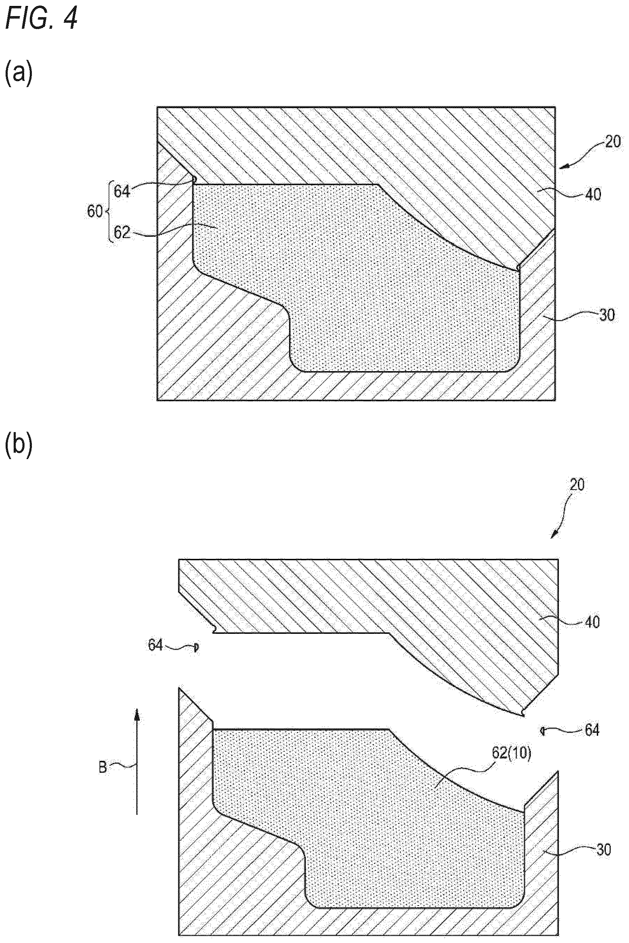

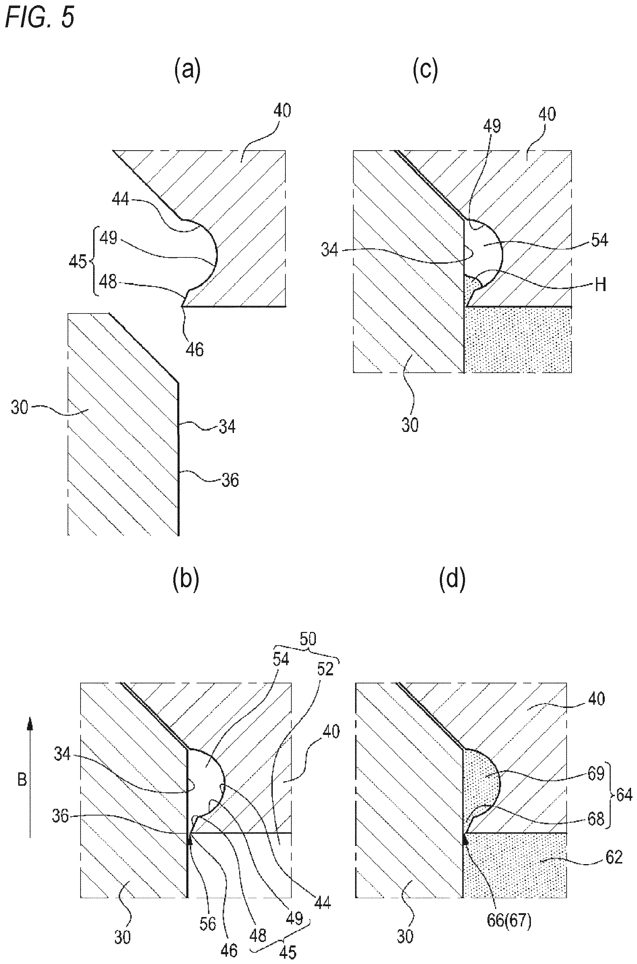

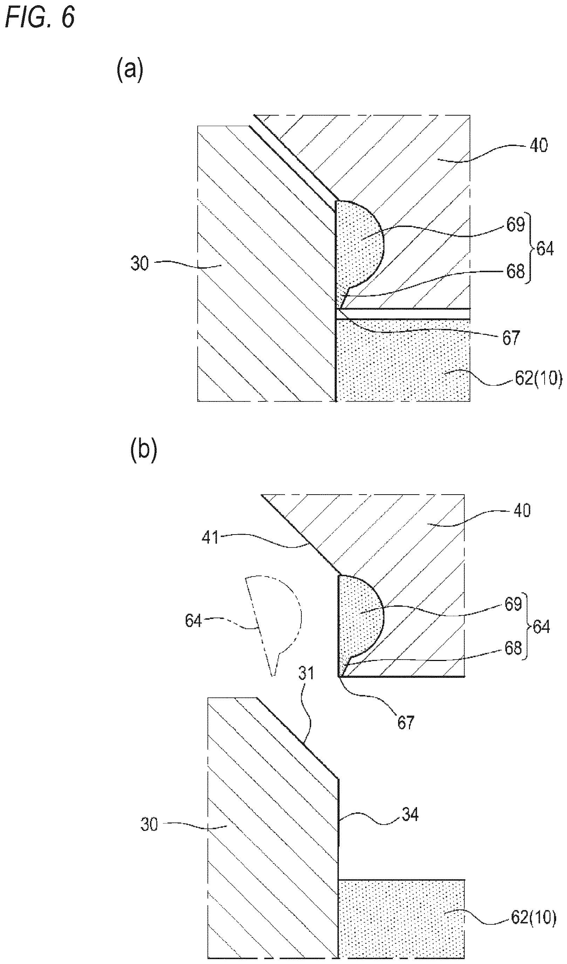

Subsequently, a molding mold 20 for producing the foam molded product 10 according to the present embodiment will be described with reference to Fig. 3 to Fig. 6. Fig. 3 and Fig. 4 are cross-sectional views each showing a state where the foam molded product 10 is molded from a foam raw material H using the molding mold 20. Fig. 3(a) shows a mold open state of the molding mold 20 after the foam raw material H is charged; and Fig. 3(b) shows a state where the foam raw material H is foaming in a mold closed state of the molding mold 20. Fig. 4(a) shows a state where foaming of the foam raw material H is completed in the mold closed state of the molding mold 20, and Fig. 4(b) shows a state where the molding mold 20 is open after the foaming is completed. Fig. 5 and Fig. 6 are partially enlarged views showing a first wall portion 34 and a second wall portion 44 of the molding mold 20, which will be described later. Fig. 5(a) shows the mold open state before the foaming of the foam raw material H, Fig. 5(b) shows the mold closed state before the foaming of the foam raw material H, Fig. 5(c) shows a state where the foam raw material H is foaming in the mold closed state, and Fig. 5(d) shows a state where the foaming of the foam raw material H is completed in the mold closed state. Fig. 6(a) shows a state where the molding mold 20 is open after the foaming is completed; and Fig. 6(b) shows a state where the molding mold 20 is open to remove a burr 64 from a movable mold portion (second mold portion) 40 described later, after the foaming is completed.

First, the outline of the molding mold 20 will be described with reference to Fig. 3 and Fig. 4. The molding mold 20 includes a fixed mold portion (first mold portion) 30 and the movable mold portion (second mold portion) 40. The movable mold portion 40 is configured to be movable in a predetermined mold opening direction with respect to the fixed mold portion 30. In the present embodiment, the fixed mold portion 30 is a lower mold, and the movable mold portion 40 is an upper mold. The fixed mold portion 30 has a concave mold surface that opens upward. The movable mold portion 40 functions as a lid for closing an upper opening of the fixed mold portion 30. When the molding mold 20 is in the mold closed state (Fig. 3(b) and Fig. 4(a)) in which the fixed mold portion 30 and the movable mold portion 40 are mold-closed, a cavity 50 is defined by the fixed mold portion 30 and the movable mold portion 40. The cavity 50 includes a main body region 52 and a burr region 54. The molding mold 20 is configured to be brought into the mold open state (Fig. 3(a) and Fig. 4(b)) from the mold closed state by moving the movable mold portion 40 to a predetermined mold opening direction with respect to the fixed mold portion 30. The mold opening direction B in Fig. 4(b) is a direction perpendicular to a ground plane of the fixed mold portion 30. However, the predetermined mold opening direction is not necessarily limited to this, and may be a mold opening direction that draws an arc, such as a molding mold in which a fixed mold portion and a movable mold portion are connected to each other via a hinge, as described later.

The molding mold 20 is configured to mold a foam intermediate 60 by foaming the foam raw material H in the cavity 50 in the mold closed state (Fig. 4(a)). The foam intermediate 60 includes a main body 62 and the burr 64. The main body 62 is a portion corresponding to the foam molded product 10. The molding mold 20 is configured to form the foam molded product 10 by molding the foam intermediate 60 in the mold closed state and opening the mold to remove the burr 64 from the main body 62 of the foam intermediate 60 (Fig. 4(b)). The fixed mold portion 30 defines a lower surface and a side surface of the foam molded product 10 shown in Fig. 1 by the concave mold surface that opens upward. The movable mold portion 40 defines the upper surface of the foam molded product 10 shown in Fig. 1 by a mold surface serving as a lid for closing the upper opening of the fixed mold portion 30.

Next, the molding mold 20 will be described in detail with reference to Fig. 5 and Fig. 6. As described above, in the mold closed state, the molding mold 20 defines the cavity 50 including the main body region 52 and the burr region 54. The fixed mold portion 30 of the molding mold 20 includes a first portion 36 forming a first boundary 56 between the main body region 52 and the burr region 54 in the mold closed state (Fig. 5(a) and Fig. 5(b)) The fixed mold portion 30 includes a first wall portion 34 extending from the first portion 36 toward a burr region 54 side in the mold closed state. A mold surface of the fixed mold portion 30 that defines the side surface of the foam molded product 10 is connected to the first portion 36. The fixed mold portion 30 includes a parting surface 31 with respect to the movable mold portion 40, which communicates with upper part of the first wall portion 34 and extend obliquely (Fig. 6(b)). In the present description, the first boundary 56 is described as the parting line of the molding mold 20. In the mold closed state, the first boundary 56 extends along an upper edge of the main body region 52 so as to correspond to the edge portion 12 on the upper surface of the foam molded product 10.

The movable mold portion 40 includes a second portion 46 forming the first boundary 56 in the mold closed state (Fig. 5(a) and Fig. 5(b)). The first portion 36 and the second portion 46 are separated by a predetermined width in the mold closed state, and are configured such that the foam raw material H foamed can enter from the main body region 52 to the burr region 54 (Fig. 5(c)). The width is not particularly limited, and may be 1 mm or less, 0.5 mm or less, or 0.3 mm or less from the viewpoint of easiness of breaking a fragile portion 67 described later. The movable mold portion 40 includes a second wall portion 44 facing the first wall portion 34 in the mold closed state (Fig. 5(a) and Fig. 5(b)). The movable mold portion 40 includes a parting surface 41 with respect to the fixed mold portion 30 , which communicates with upper part of the second wall portion 44 and extend obliquely (Fig. 6(b)). The second wall portion 44 includes a concave portion 45 recessed in a direction intersecting the mold opening direction B and forming a gap with the first wall portion 34 in the mold closed state. The concave portion 45 includes an inclined portion 48 communicating with the second portion 46. The inclined portion 48 is inclined with respect to the first wall portion 34 so as to be separated from the first wall portion 34 as separated from the first boundary 56 in the mold closed state. The concave portion 45 may include a main concave portion 49 formed on an inclined portion 48 side opposite to the first boundary 56 such that the second wall portion 44 is separated from the first wall portion 34 at a distance larger than a distance between the first wall portion 34 and the inclined portion 48 in the mold closed state.

In the present embodiment, the main concave portion 49 is recessed in the direction intersecting the mold opening direction B as a concave portion having a substantially semicircular shape in a cross section obtained by cutting the movable mold portion 40 at a plane orthogonal to a direction in which the first boundary 56 extends (Fig. 5(b)). The molding mold 20 is configured to form the burr 64 that functions as an undercut by incorporating the foam raw material H into the main concave portion 49 and hardening the foam raw material H when molding the foam intermediate 60 in a mold clamped state (Fig. 5(c) and Fig. 5(d)). The molding mold 20 is configured such that the burr 64 is caught on a lower edge of the main concave portion 49 of the movable mold portion 40 when the movable mold portion 40 is moved to open the mold after the foam intermediate 60 is molded (Fig. 6(a) and Fig. 6(b)).

In the above cross section shown in Fig. 5(b), a space defined by the inclined portion 48 located between the main concave portion 49 and the second portion 46 and the first wall portion 34 near the first portion 36 has a substantially triangular shape. An apex portion of the substantially triangular space is located at the first boundary 56. The molding mold 20 is configured such that the foam intermediate 60 can be provided with a portion that narrows toward the first boundary 56 by the curing of the foam raw material H in the substantially triangular space when molding the foam intermediate 60 in the mold clamped state (Fig. 5(d)). An angle at the apex portion of the substantially triangular space (the inclination angle of the inclined portion 48 with respect to the first wall portion 34) is not particularly limited, and is preferably 30° or more, and more preferably about 60°. However, the space does not necessarily have to be triangular. If the space is formed to have the smallest wall thickness in the fragile portion 67 described later, the space may be a curved space. In the present embodiment, the main concave portion 49 is not a portion merely extending the inclined portion 48, but is configured such that an edge surface of the main concave portion 49 at a second boundary between the main concave portion 49 and the inclined portion 48 is inclined with respect to the first wall portion 34 at an angle larger than the inclination angle of the inclined portion 48 with respect to the first wall portion 34. The above configuration is not essential, and the configuration facilitates the formation of the undercut that is easily caught in the main concave portion 49.

### (Method for Producing Foam Molded Product)

Subsequently, a method for producing the foam molded product 10 according to the present embodiment will be described with reference to Fig. 3 to Fig. 6. The method for producing the foam molded product 10 includes a foaming step and a removal step. In the foaming step, in the cavity 50 defined by the fixed mold portion 30 and the movable mold portion 40, the foam intermediate 60 including the main body 62 and the burr 64 is foam-molded from the foam raw material H (Fig. 3(a), Fig. 3(b) and Fig. 4(a)). In the removal step, the burr 64 is removed from the foam intermediate 60 by moving the movable mold portion 40 in the mold opening direction B, to obtain the foam molded product 10 (Fig. 4(b)).

In the foaming step, at least a part of the burr 64 is made to be an undercut that is caught in the movable mold portion 40 when the movable mold portion 40 is mold-opened (Fig. 5(d)). In addition, the fragile portion 67 is provided at the third boundary 66 such that in a cross section obtained by cutting the foam intermediate 60 on a plane orthogonal to a direction in which a third boundary 66 between the main body 62 and the burr 64 extends, at least a part of the burr 64 located near the third boundary 66 is narrowed toward the third boundary 66 (Fig. 5(d)). Accordingly, the foam intermediate 60 is formed. The third boundary 66 is formed at a position corresponding to the first boundary 56 (Fig. 5(b) and Fig. 5(d)). In addition, in the foaming step, in the above cross section, a narrow portion 68 that narrows toward the third boundary 66 and communicates with the fragile portion 67 may be formed (Fig. 5(d)). In addition, in the foaming step, the main undercut portion 69 that communicates with the narrow portion 68 on a narrow portion 68 side opposite to the fragile portion 67, overhangs from the narrow portion 68 in the direction intersecting the mold opening direction B, and is caught in the movable mold portion 40 when the movable mold portion 40 is mold-opened, may be formed (Fig. 5(d)).

More specially, in the foaming step using the molding mold 20, the foam raw material H foams and enters the burr region 54 of the cavity 50 through the first boundary 56 (Fig. 5(c)). The foam raw material H that has entered the burr region 54 is then cured to become the burr 64 (Fig. 5(d)). As described above, since the burr region 54 includes the first wall portion 34 of the fixed mold portion 30 and the concave portion 45 of the second wall portion 44 of the movable mold portion 40, the burr 64 including the narrow portion 68 and the main undercut portion 69 respectively corresponding to the inclined portion 48 and the main concave portion 49 of the concave portion 45 is formed.

In the present embodiment, the main undercut portion 69 overhangs in the direction intersecting the mold opening direction B as an overhanging portion having a substantially semicircular shape in a cross section obtained by cutting the foam intermediate 60 at a plane orthogonal to the direction in which the third boundary 66 extends (Fig. 5(d)). In addition, in the cross section shown in Fig. 5, the narrow portion 68 located between the third boundary 66 and the main undercut portion 69 has a substantially triangular shape. An apex portion of the substantially triangular shape is located at the third boundary 66. The fragile portion 67 is located at the apex portion. Similar to the above substantially triangular space, if the narrow portion 68 is formed to have the smallest wall thickness in the fragile portion 67, the narrow portion 68 may have a curved shape. Further, in the present embodiment, the main undercut portion 69 is not a portion merely extending the narrow portion 68, but is configured to overhang at a fourth boundary between the main undercut portion 69 and the narrow portion 68 in a direction intersecting the mold opening direction B rather than the state of extending from the narrow portion 68. The above configuration is not essential, and the configuration facilitates the formation of the burr 64 that can be easily caught in the movable mold portion 40.

In the removal step, the fragile portion 67 is broken and the burr 64 is removed by pulling the burr 64 with the movable mold portion 40 (Fig. 6(a) and Fig. 6(b)). More specifically, the main undercut portion 69 is caught in the main concave portion 49 by moving the movable mold portion 40 in the mold opening direction B. Accordingly, a force is applied to the burr 64 in the mold opening direction. The thinnest formed fragile portion 67, located at an end portion of the narrow portion 68 that narrows toward the third boundary 66, breaks in preference to the other portion of the burr 64. Accordingly, the burr 64 is removed, and the foam molded product 10 is obtained.

### (Function)

In the production method according to the present embodiment, in the foaming step, a part of the burr 64 is made to be an undercut, and the fragile portion 67 is provided at the third boundary 66 such that a part of the burr 64 located near the third boundary 66 between the main body 62 and the burr 64 is narrowed toward the third boundary 66 between the main body 62 and the burr 64, so that the foam intermediate 60 is formed. The fragile portion 67 is the thinnest portion of the burr 64, and the thickness of the burr 64 increases as separated from the fragile portion 67. Since the fragile portion 67 is more easily to break than portions other than the fragile portion 67 when the movable mold portion 40 is mold-opened, the fragile portion 67 is preferentially broken and the burr 64 is removed in the removal step. Accordingly, unevenness of the broken portion of the burr 64 is less likely to occur, and burrs are less likely to remain on the foam molded product 10.

In addition, in the production method according to the present embodiment, the main undercut portion 69 is formed to overhang from the narrow portion 68 in the direction intersecting the mold opening direction B. Accordingly, the main undercut portion 69 can be reliably caught in the movable mold portion 40, and breakage at the fragile portion 67 can be satisfactorily realized.

The molding mold 20 according to the present embodiment is configured such that, in the mold closed state, the distance between the first wall portion 34 of the fixed mold portion 30 and the inclined portion 48 of the second wall portion 44 of the movable mold portion 40 increases as separated from the first boundary 56 between the main body region 52 and the burr region 54. When molding the foam intermediate 60 with the molding mold 20, the burr 64 of the molded product leaking from the first boundary 56 to the burr region 54 becomes thicker as separated from the first boundary 56. Then, the portion of the burr 64 located at the first boundary 56 becomes the thinnest. In the foam intermediate 60, when the movable mold portion 40 is moved to be in a mold open state, the burr 64, which is formed to become thicker as separated from the first boundary 56, is caught in the movable mold portion 40 as an undercut intersecting the mold opening direction B, the thin fragile portion 67 located at the first boundary 56 is broken, and the foam molded product 10 is released from the movable mold portion 40. Since the burr 64 can be broken at the fragile portion 67 located at the first boundary 56, unevenness of the broken portion is less likely to occur, and burrs are less likely to remain on the foam molded product 10.

In addition, in the molding mold 20 according to the present embodiment, the burr 64 of the foam intermediate 60 can be provided with a larger undercut by providing the main concave portion 49 on the second wall portion 44 of the movable mold portion 40. Accordingly, the undercut can be more reliably caught in the movable mold portion 40, and the breakage at the fragile portion 67 can be satisfactorily realized.

### (Modifications)

The present invention is not limited to the above embodiment and may be modified or improved as appropriate. Materials, shapes, sizes, numerical values, forms, numbers, arrangement places, and the like of components in the above embodiment are optional and not limited as long as the present invention can be achieved. Hereinafter, modifications of the above embodiment will be described. In the modifications, a different reference numeral is given to a portion including an element different from the above embodiment, and the same configuration is adopted for other portions, and the description thereof will be omitted.

### (First Modification)

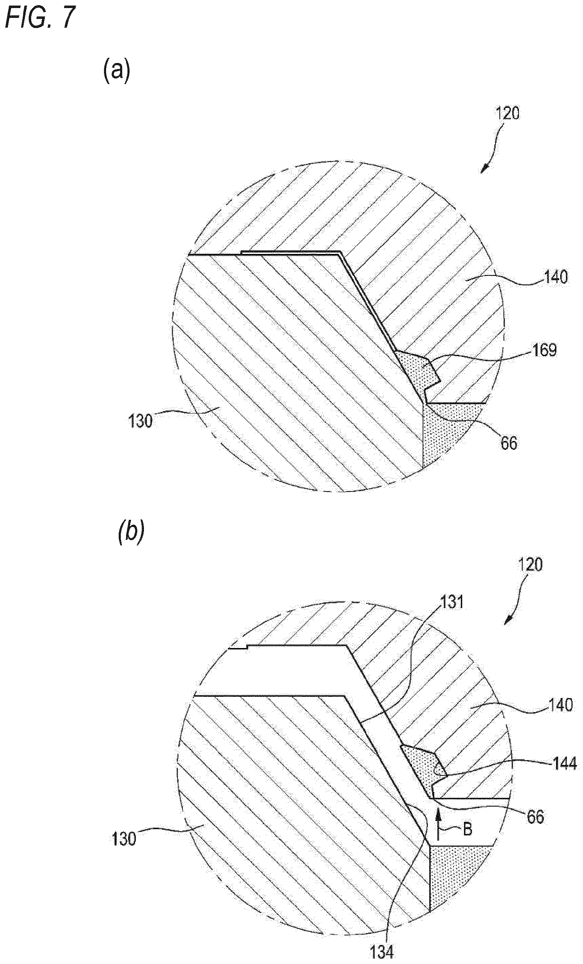

Fig. 7 is a diagram showing a first modification of the above embodiment. Fig. 7(a) shows a state where foaming of the foam raw material H is completed in the mold closed state of a molding mold 120 according to the first modification, and Fig. 7(b) shows a state where the molding mold 120 is mold-opened after the foaming is completed. In the above embodiment, the main undercut portion 69 is described to overhang in the direction intersecting the mold opening direction B as an overhanging portion having a substantially semicircular shape in a cross section obtained by cutting the foam intermediate 60 at a plane orthogonal to the direction in which the third boundary 66 extends. On the other hand, as shown in Fig. 7, the main undercut portion 169 may overhang as a polygonal overhanging portion in the above cross section in the direction intersecting the mold opening direction B.

In addition, the first wall portion 34 and the second wall portion 44 shown in Fig. 5 and Fig. 6 extend in the mold opening direction B and are connected at the end portions thereof to the parting surfaces 31 and 41 extending obliquely with respect to the mold opening direction B. On the other hand, as shown in Fig. 7, a first wall portion 134 of a fixed mold portion 130 and a second wall portion 144 of a movable mold portion 140 may extend in a direction intersecting the mold opening direction B. Further, the first wall portion 134 of the fixed mold portion 130 may extend in the same direction as a parting surface 131 of the fixed mold portion 130.

### (Second Modification)

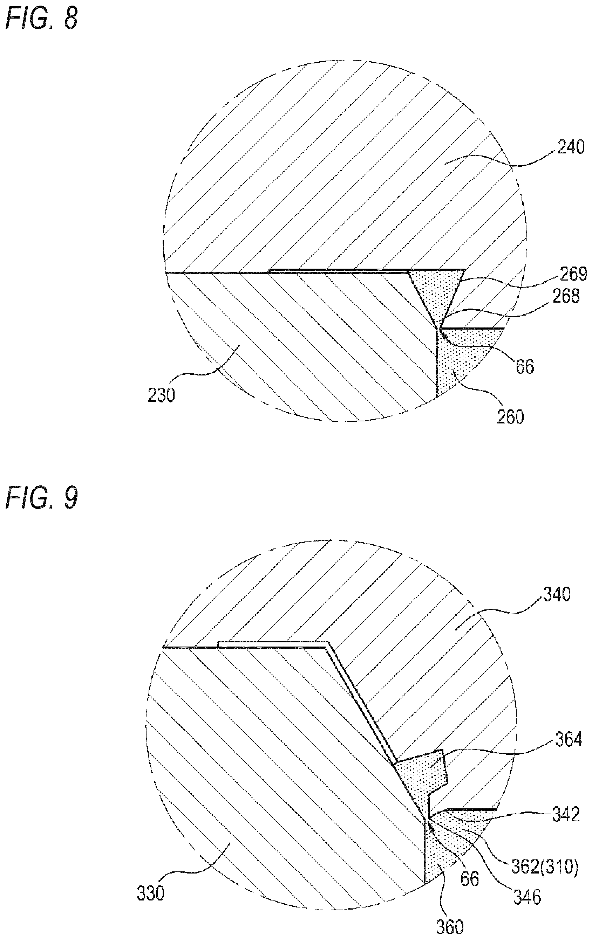

Fig. 8 is a diagram showing a second modification of the above embodiment. As shown in Fig. 8, in a state where a fixed mold portion 230 and a movable mold portion 240 are mold-closed, in a cross section obtained by cutting a foam intermediate 260 at a plane orthogonal to the direction in which the third boundary 66 extends, a narrow portion 268 and a main undercut portion 269 may be integrated to form a substantially triangular overhanging portion, which overhangs in the direction intersecting the mold opening direction B.

### (Third Modification)

Fig. 9 is a diagram showing a third modification of the above embodiment. As shown in Fig. 9, in a state where a fixed mold portion 330 and a movable mold portion 340 are moled-closed, in a cross section obtained by cutting a foam intermediate 360 at a plane orthogonal to the direction in which the third boundary 66 extends, a third portion 342 corresponding to a surface defining an outer shape of a main body 362 of the foam intermediate 360, which is near a second portion 346 of the movable mold portion 340 may be curved. More specifically, the third portion 342 may be curved such that a portion near a parting line of the foam molded product 310 to be molded has a slightly rounded shape. In this case, the foam molded product 310 to be formed is less likely to have corners, and the work load of finishing after removing a burr 364 can be reduced.

### (Fourth Modification)

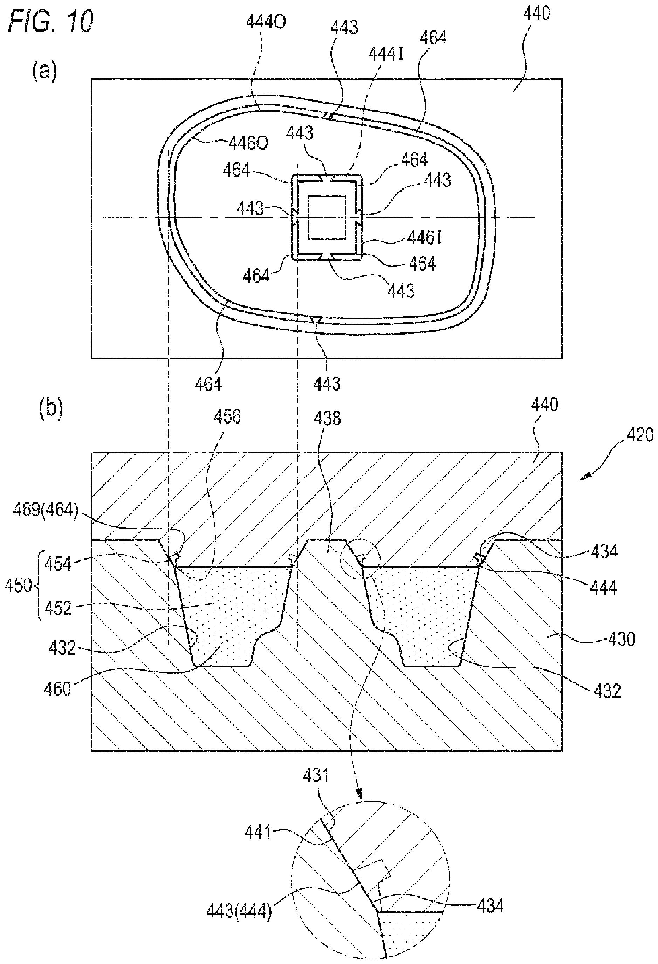

Fig. 10 is a diagram showing a fourth modification of the above embodiment. Fig. 10(a) shows a state where a burr 464 is attached to a movable mold portion 440 after a removal step using a molding mold 420 according to the fourth modification. Fig. 10(b) is a diagram showing a cross section obtained by cutting a molding mold 420 in a foaming step along an alternate long and short dash line shown in Fig. 10(a) and at a plane corresponding to a plane orthogonal to the paper surface in Fig. 10(a).

As shown in Fig. 10(a) and Fig. 10(b), the molding mold 420 according to the fourth modification includes a fixed mold portion 430 having a concave portion 432 recessed in a donut shape and the movable mold portion 440 covering the concave portion. A first wall portion 434 of the fixed mold portion 430 and a second wall portion 444 of the movable mold portion 440 extend in the direction intersecting the mold opening direction B, similar to the mode described in the first modification. Further, the first wall portion 434 of the fixed mold portion 430 extends in the same direction as a parting surface 431 of the fixed mold portion 430. In addition, similar to the mode described in the first modification, a main undercut portion 469 of a burr 464 formed in a foam intermediate 460 overhangs as a polygonal overhanging portion in the cross section shown in Fig. 10(b) in the direction intersecting the mold opening direction B.

The second wall portion 444 of the movable mold portion 440 includes an inner peripheral second wall portion 4441 and an outer peripheral second wall portion 444O located on an inner peripheral side and an outer peripheral side of the donut-shaped concave portion 432 of the fixed mold portion 430, respectively. The inner peripheral second wall portion 4441 and the outer peripheral second wall portion 444O respectively include a second portion 4461 and a second portion 446O that define a first boundary 456 between a main body region 452 and a burr region 454 of a cavity 450. The second portion 4461 of the inner peripheral second wall portion 4441 extends in a peripheral direction of a convex portion 438 located at a center of the donut-shaped concave portion 432 of the fixed mold portion 430 in the mold closed state. The second portion 446O of the outer peripheral second wall portion 444O extends over an outer periphery of the donut-shaped concave portion 432 of the fixed mold portion 430 in the mold closed state.

The second wall portion 444 may include at least one seal portion 443 that does not form a gap with the first wall portion 434 in the mold closed state, in each direction in which the second portion 4461 and the second portion 446O extend. More specifically, in the fourth modification, the outer peripheral second wall portion 444O includes two seal portions 443 in the direction in which the second portion 446O extends (Fig. 10(a)). The inner peripheral second wall portion 444I includes four seal portions 443 in the direction in which the second portion 4461 extends (Fig. 10(a)). The seal portion 443 is a portion of the inner peripheral second wall portion 4441 or the outer peripheral second wall portion 444O that overhangs more than a portion other than the seal portion 443. In comparison with the portion other than the seal portion 443, the seal portion 443 can be regarded as a portion in which concave portions of the inner peripheral second wall portion 4441 and the outer peripheral second wall portion 444O are embedded (Fig. 10(b)). The seal portion 443 extends in the same direction as a parting surface 441 of the movable mold portion 440, and faces the first wall portion 434 of the fixed mold portion 430 without forming a gap in the mold closed state.

By performing the foaming step using the molding mold 420 according to the fourth modification, the foam intermediate 460 can be formed without forming the burr 464 in at least a part of the foam intermediate 460 in the direction in which the first boundary 456 extends. When the movable mold portion 440 is moved to be in the mold open state after forming the foam intermediate 460, the burr 464 is attached to the movable mold portion 440. Accordingly, the burr 464 attached to the movable mold portion 440 can be easily removed starting from the portion where the burr 464 is not formed. In the fourth modification, an example in which a plurality of seal portions 443 are provided is shown. Alternatively, since the burr 464 has high elasticity when the material of the foam is soft, the step of removing the burr 464 from the movable mold portion 440 can be easily performed even when one seal portion is provided in the peripheral direction. Since the elasticity of the burr 464 is low when the material of the foam is hard, the step of removing the burr 464 from the movable mold portion 440 can be easily performed by providing a plurality of seal portions 443 as in the fourth modification.

### (Fifth Modification)

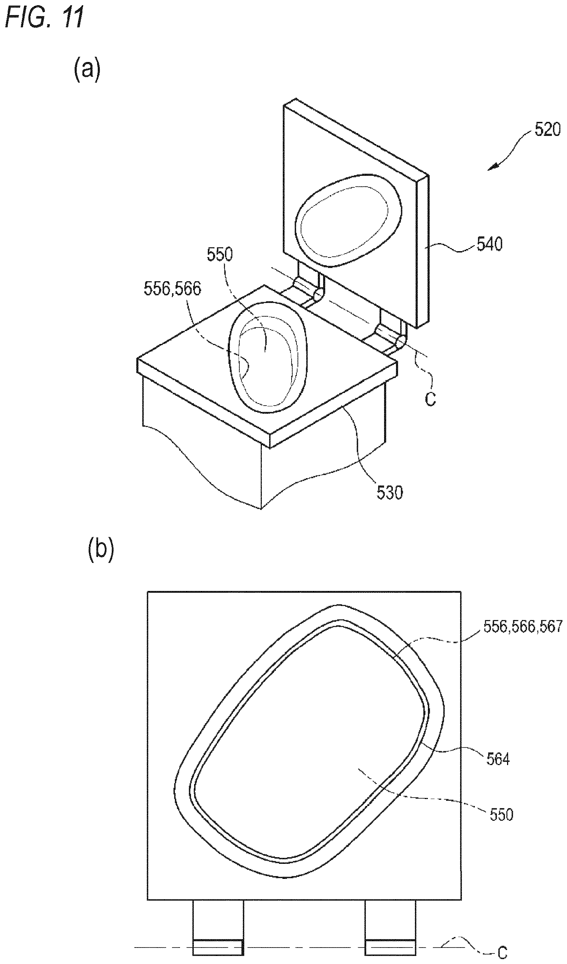

Fig. 11 is a diagram showing a fifth modification of the above embodiment. Fig. 11(a) shows a molding mold 520 according to a fifth modification. Fig. 11(b) shows a state where a burr 564 is attached to a movable mold portion 540 after a removal step using the molding mold 520 according to the fifth modification. A concave portion formed in the movable mold portion 540 of the molding mold 520 is assumed to have the same mode as the concave portion 45 described in the above embodiment (Fig. 5).

The molding mold 520 is configured such that a fixed mold portion 530 and the movable mold portion 540 are connected to each other via a rotation shaft C, and the movable mold portion 540 rotates around the rotation shaft C to change from the mold closed state to the mold open state. Then, in the mold closed state, a first boundary 556 (corresponding to the third boundary) located on a side opposite to the rotation shaft C across a cavity 550 extends in a direction intersecting the rotation shaft C (Fig. 11(b)). Therefore, in a foaming step using the molding mold 520, a foam intermediate can be formed such that a fragile portion 567 located on a side opposite to the rotation shaft C across the cavity 550 extends in the direction intersecting the rotation shaft C.

In a molding mold in which a movable mold portion rotates around a rotation shaft such as a mold provided with a hinge, the mold opening direction is bent in an arc shape. Therefore, depending on the shape of a burr and an extending direction, the burr may come off from the movable mold portion without being caught as an undercut in the movable mold portion, and the burr may remain on the foam molded product. In particular, there is a concern that on an opposite side of a rotation shaft across a cavity, the burr remains on the foam molded product when the extending direction of the inclined surface of the undercut is closer to the mold opening direction in which the undercut is bent in an arc shape more than on the rotation shaft side. As described above, when the foam intermediate is formed such that the fragile portion 567 located far from the rotation shaft C extends in the direction intersecting the rotation shaft C, the undercut is easily caught in the movable mold portion. Specifically, when the mold opening direction is located on an xy plane, the inclination of the inclined surface of the undercut in a z-axis direction can be increased, so that the undercut is easily caught in the movable mold portion. Accordingly, the burr can be less likely to remain on the foam molded product.

The expression "the fragile portion located on the side opposite to the rotation shaft across the cavity extends in the direction intersecting the rotation shaft" does not mean that the entire fragile portion (the fragile portion on the opposite side) is not parallel to the rotation shaft, and the effect of the above configuration can be realized even when a part of curved or bent portion is parallel to the rotation shaft. Here, the expression "the fragile portion located on the side opposite to the rotation shaft across the cavity" refers to a fragile portion passing through after a straight line orthogonal to the rotation shaft C is drawn from the rotation shaft side and the straight line passes through a portion corresponding to the cavity when the fragile portion, the cavity, and the rotation shaft are projected in a plane (see, for example, Fig. 11(b)). However, when a non-cavity portion exists inside the cavity as in the mode in which the fixed mold portion shown in the fourth modification has a donut-shaped concave portion, the fragile portion refers to a fragile portion through which the straight line finally passes after passing through the portion corresponding to the cavity. Although not particularly limited, a fragile portion of 20% or less, preferably 15% or less, more preferably 10% or less of the total length of the boundary extending from the side opposite to the rotation shaft across the cavity may be parallel to the rotation shaft.

Hereinafter, modes extracted from the above embodiment and modifications will be listed.
[Mode 1] A method for producing a foam molded product including:
   a foaming step of foam-molding a foam intermediate including a main body and a burr from a foam raw material in a cavity defined by a first mold portion and a second mold portion; and
   a removal step of removing the burr from the foam intermediate by moving the second mold portion in a predetermined mold opening direction to obtain a foam molded product, wherein
   in the foaming step,
      at least a part of the burr is made to be an undercut that is caught in the second mold portion when mold opening the second mold portion,
      a fragile portion is provided at a boundary between the main body and the burr such that in a cross section obtained by cutting the foam intermediate on a plane orthogonal to a direction in which the boundary between the main body and the burr extends, at least a part of the burr located near the boundary is narrowed toward the boundary, and
      the foam intermediate is molded, and
   in the removal step,
      the fragile portion is broken and the burr is removed by pulling the burr with the second mold portion.
[Mode 2] The method for producing a foam molded product according to mode 1, wherein
   in the foaming step,
   the foam intermediate is formed, the burr in the foam intermediate including:
   a narrow portion that narrows toward the boundary in the cross section and communicates with the fragile portion; and
   a main undercut portion that communicates with the narrow portion on a side opposite to the fragile portion, overhangs from the narrow portion in a direction intersecting the mold opening direction, and is caught in the movable mold portion when mold opening the movable mold portion.
[Mode 3] The method for producing a foam molded product according to mode 1 or 2, wherein in the foaming step, the burr is not formed on at least a part of the foam intermediate in the direction in which the boundary extends.
[Mode 4] The method for producing a foam molded product according to any one of modes 1 to 3, wherein
   the first mold portion and the second mold portion are connected to each other via a rotation shaft, and the second mold portion is configured to rotate around the rotation shaft to change from a mold closed state to a mold open state, and
   in the foaming step, the foam intermediate is formed such that the fragile portion located on a side opposite to the rotation shaft across the cavity extends in a direction intersecting the rotation shaft.
[Mode 5] A molding mold including:
   a first mold portion; and
   a second mold portion, wherein
   the molding mold is configured to be brought from a mold closed state into a mold open state by moving the second mold portion in a predetermined mold opening direction with respect to the first mold portion, and in the mold closed state, a cavity including a main body region and a burr region is defined by the first mold portion and the second mold portion,
   the molding mold is configured to mold a foam intermediate in the cavity, the foam intermediate including a main body and a burr,
   the first mold portion includes a first wall portion extending to a burr region side from a first portion forming a boundary between the main body region and the burr region in the mold closed state, the second mold portion includes a second wall portion facing the first wall portion in the mold closed state,
   the second wall portion includes a concave portion recessed in a direction intersecting the mold opening direction and forming a gap with the first wall portion in the mold closed state,
   the concave portion includes an inclined portion communicating with a second portion of the second mold portion forming the boundary in the mold closed state, and
   the inclined portion is inclined with respect to the first wall portion so as to be separated from the first wall portion as separated from the boundary in the mold closed state.
[Mode 6] The molding mold according to mode 5, wherein the concave portion includes a main concave portion formed on an inclined portion side opposite to the boundary such that the second wall portion is separated from the first wall portion at a distance larger than a distance between the first wall portion and the inclined portion in the mold closed state.
[Mode 7] The molding mold according to mode 5 or 6, wherein the second wall portion includes, in a direction in which the second portion extends, at least one seal portion that does not form a gap with the first wall portion in the mold closed state.
[Mode 8] The molding mold according to any one of modes 5 to 7, wherein
   the first mold portion and the second mold portion are connected to each via a rotation shaft, and the second mold portion is configured to rotate around the rotation shaft to change from the mold closed state to the mold open state, and
   in the mold closed state, the boundary located on a side opposite to the rotation shaft across the cavity extends in a direction intersecting the rotation shaft.

The present application is based on Japanese Patent Application (No. 2019-009304) filed on January 23, 2019, the entire contents of which are incorporated herein by reference. In addition, all references cited here are entirely incorporated.

### REFERENCE SIGNS LIST

10, 310: foam molded product
12: edge portion
20, 120, 420, 520: molding mold
30, 130, 230, 330, 430, 530: fixed mold portion (first mold portion)
31, 41, 131, 431, 441: parting surface
432: concave portion
34, 134, 434: first wall portion
36: first portion
438: convex portion
40, 140, 240, 340, 440, 540: movable mold portion (second mold portion)
342: third portion
433, 443: seal portion
44, 144, 444: second wall portion
4441: inner peripheral second wall portion
444O: outer peripheral second wall portion
45: concave portion
46, 4461, 446O: second portion
48: inclined portion
49: main concave portion
50, 450, 550: cavity
52, 452: main body region
54, 454: burr region
56, 456, 556: first boundary
60, 260, 360, 460: foam intermediate
62, 362: main body
64, 364, 464, 564: burr
66, 566: third boundary
67, 567: fragile portion
68, 268: narrow portion
69, 169, 269, 469: main undercut portion
B: mold opening direction
C: rotation shaft
H: foam raw material

## Claims

1. A method for producing a foam molded product, comprising:
a foaming step of foam-molding a foam intermediate including a main body and a burr from a foam raw material in a cavity defined by a first mold portion and a second mold portion; and
a removal step of removing the burr from the foam intermediate by moving the second mold portion in a predetermined mold opening direction to obtain a foam molded product, wherein
in the foaming step,
at least a part of the burr is made to be an undercut that is caught in the second mold portion when mold opening the second mold portion,
a fragile portion is provided at a boundary between the main body and the burr such that in a cross section obtained by cutting the foam intermediate on a plane orthogonal to a direction in which the boundary between the main body and the burr extends, at least a part of the burr located near the boundary is narrowed toward the boundary, and
the foam intermediate is molded, and
in the removal step,
the fragile portion is broken and the burr is removed by pulling the burr with the second mold portion.

2. The method for producing a foam molded product according to claim 1, wherein
in the foaming step,
the foam intermediate is formed, the burr in the foam intermediate including:
a narrow portion that narrows toward the boundary in the cross section and communicates with the fragile portion; and
a main undercut portion that communicates with the narrow portion on a side opposite to the fragile portion, overhangs from the narrow portion in a direction intersecting the mold opening direction, and is caught in the second mold portion when mold opening the second mold portion.

3. The method for producing a foam molded product according to claim 1 or 2, wherein in the foaming step, the burr is not formed on at least a part of the foam intermediate in the direction in which the boundary extends.

4. The method for producing a foam molded product according to any one of claims 1 to 3, wherein
the first mold portion and the second mold portion are connected to each other via a rotation shaft, and the second mold portion is configured to rotate around the rotation shaft to change from a mold closed state to a mold open state, and
in the foaming step, the foam intermediate is formed such that the fragile portion located on a side opposite to the rotation shaft across the cavity extends in a direction intersecting the rotation shaft.

5. A molding mold comprising:
a first mold portion; and
a second mold portion, wherein
the molding mold is configured to be brought from a mold closed state into a mold open state by moving the second mold portion in a predetermined mold opening direction with respect to the first mold portion, and in the mold closed state, a cavity including a main body region and a burr region is defined by the first mold portion and the second mold portion,
the molding mold is configured to mold a foam intermediate in the cavity, the foam intermediate including a main body and a burr,
the first mold portion includes a first wall portion extending to a burr region side from a first portion forming a boundary between the main body region and the burr region in the mold closed state,
the second mold portion includes a second wall portion facing the first wall portion in the mold closed state,
the second wall portion includes a concave portion recessed in a direction intersecting the mold opening direction and forming a gap with the first wall portion in the mold closed state,
the concave portion includes an inclined portion communicating with a second portion of the second mold portion forming the boundary in the mold closed state, and
the inclined portion is inclined with respect to the first wall portion so as to be separated from the first wall portion as separated from the boundary in the mold closed state.

6. The molding mold according to claim 5, wherein the concave portion includes a main concave portion formed on an inclined portion side opposite to the boundary such that the second wall portion is separated from the first wall portion at a distance larger than a distance between the first wall portion and the inclined portion in the mold closed state.

7. The molding mold according to claim 5 or 6, wherein the second wall portion includes, in a direction in which the second portion extends, at least one seal portion that does not form a gap with the first wall portion in the mold closed state.

8. The molding mold according to any one of claims 5 to 7, wherein
the first mold portion and the second mold portion are connected to each via a rotation shaft, and the second mold portion is configured to rotate around the rotation shaft to change from the mold closed state to the mold open state, and
in the mold closed state, the boundary located on a side opposite to the rotation shaft across the cavity extends in a direction intersecting the rotation shaft.
